# EUROPEAN PATENT SPECIFICATION

(11) **EP 2 616 670 B1**
(45) Date of publication and mention of the grant of the patent: **21.10.2015**
(21) Application number: 11758113.2
(22) Date of filing: 14.09.2011
(51) Int. Cl.: F03D 1/00, F03D 1/06

(54) **An apparatus for and method of mounting wind turbine blades on a wind turbine tower**
Vorrichtung und Verfahren zur Montage von Windturbinenschaufeln eines Windturbinenturms
Appareil et méthode de montage des pales d'une turbine éolienne sur une tour de turbine éolienne

(30) Priority: 15.09.2010 US 383126 P; 15.09.2010 GB 201015432
(43) Date of publication of application: 24.07.2013
(73) Proprietor: MHI Vestas Offshore Wind A/S, 8200 Aarhus N (DK)
(72) Inventor: MORTENSEN, Henning, DK-8960 Randers SØ (DK); KRUUSE, Søren Hvolgaard, DK-9990 Skagen (DK); BOTWRIGHT, Adrian, DK-8471 Sabro (DK); PEDERSEN, Gunnar K. Storgaard, DK-6900 Skjern (DK)
(74) Representative: Irons, Mark David
(86) International application number: PCT/DK2011/050346
(87) International publication number: WO 2012/034565

(56) References cited:
- DE-A1-102008 053 404
- JP-A- 6 257 555
- US-A1- 2010 028 152
- US-A1- 2010 135 797

## Description

The invention relates to an apparatus for and a method of mounting wind turbine blades on a wind turbine tower, and in particular for wind turbines that are intended for offshore environments.

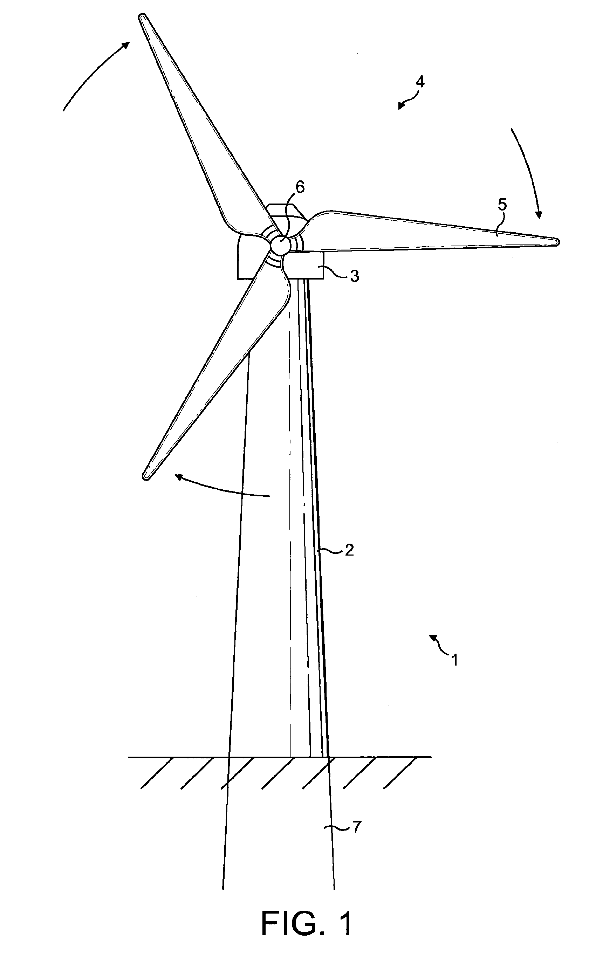

Figure 1 illustrates an off-shore horizontal axis wind turbine 1, comprising a wind turbine tower 2 on which a wind turbine nacelle 3 is mounted, and a rotor 4, comprising at least one wind turbine blade 5. The at least one wind turbine blade is mounted on a rotor hub 6 connected to the nacelle 3 through a low speed shaft (not shown) extending from the nacelle front. The wind turbine tower 2 is installed at an offshore location on a tower foundation 7, such as a monopile sunk into the sea floor. The wind turbine tower may have a platform arranged just above sea level for engineer access though this is not shown in the diagram.

Due to the cost of installing and maintaining wind turbines at sea, and the amount of available wind energy potentially available for capture at offshore sites, the dimensions of offshore wind turbines are typically as large as possible, for example rotor diameters of 100 to 150m are not unusual. While installing large offshore wind turbines can maximise the return in terms of the income and the power generated by the turbine, large structures can be more difficult to install and repair than is the case for smaller, lighter models.

Construction of an offshore wind turbine would for example typically begin at on shore facilities where a large crane can easily be provided for lifting the wind turbine components into their assembled position. The crane may for example be required to perform five or more lifting operations, one each for the tower and nacelle, and subsequently one for each of the three wind turbine blades. Once the wind turbine is assembled it is then transported by barge to the offshore installation location, where a crane on the transport barge lifts the tower into position onto the tower foundation 7.

Variations of this construction technique are possible, such as on shore assembly of only some of the wind turbine components, with the final assembly taking place at the offshore location by means of the barge crane. One technique is two attach two of the blades to the rotor hub of the nacelle in a rabbit ear configuration, and attach a single blade to the tower by means of a temporary fixing. At the offshore location, the nacelle and the tower are then connected to one another, and the blade attached to the tower is connected to the rotor hub at the correct position.

In many cases, the nacelle of the wind turbine is also provided with a crane for lifting components into position. Due to structural limitations arising from its position in the nacelle, the nacelle crane is typically not capable of lifting loads of the same magnitude as the barge or on-shore crane.

The nacelle or on tower crane can be used during construction of the offshore wind turbine, and also during maintenance operations. Occasionally during such operations, it is necessary to detach a wind turbine blade from the rotor hub, so that the blade or the hub can be inspected, and if necessary repaired. Means for temporarily attaching the wind turbine blade to the tower for maintenance are also known, such as those discussed in WO 2009/068038 and EP 2226502. These applications disclose two blade mounting points on the tower per blade, one for engaging with the blade root region of the blade and one for engaging with the blade tip region. A further type of mounting system is discussed in JP 6-257,555 in which a mounting arm is provided on the tower for engaging with a connection point at the blade root region of the blade. The arm is articulated and is used to attach and detach the blade from the hub, while a blade tying device is provided further along the tower to engage with an intermediate portion of the blade and secure the blade in place against wind gusts and the like when it is detached.

A further mounting system is discussed in US 2010/0135797 in which two support arms are used to support the blade while it is detached from the rotor hub. The first support arm engages at the blade root region of the blade while the second arm engages at the blade tip region of the blade.

We have appreciated that as wind turbine blades become larger, detaching and attaching a blade to the rotor hub will become more difficult. The weight of the blade alone will result in increased load on any support or lifting assembly, while wind gusts acting on the increased surface area of the blade will make the system more unstable and difficult to operate. We have therefore appreciated that there is a need for an improved blade mounting device.

### BRIEF DESCRIPTION OF THE DRAWINGS

Examples of the invention will now be described by way of example and with reference to the drawings in which:
Figure 1 is a schematic illustration of an offshore wind turbine;
Figure 2 is a schematic illustration according to a first example of an offshore wind turbine nacelle and upper tower section with attachment points for one or more wind turbine blades;
Figure 3 is a schematic illustration according to a first example of the wind turbine of a longer section of the tower shown in Figure 2, with attachment points for one or more wind turbine blades;
Figure 4 is a top elevational view of the tower shown in Figure 2 and 4;
Figure 5 is a close-up view of the attachment points for the wind turbine blades;
Figure 6 is a close-up view of the attachment points for the tips of the wind turbine blades;
Figure 7 is a schematic illustration showing the positioning of the blade guide arms;
Figure 8 is a schematic illustration showing a method for attaching a blade to the rotor hub, wherein the blade is in a starting position;
Figure 9 is a schematic illustration showing a method for attaching a blade to the rotor hub, wherein the blade is in a second position;
Figure 10 is a schematic illustration showing a method for attaching a blade to the rotor hub, wherein the blade is in a third position;
Figure 11 is a schematic illustration showing a method for attaching a blade to the rotor hub, wherein the blade is in a final position;
Figure 12 is a schematic illustration of an alternative embodiment of blade guide arms in a starting position;
Figure 13 is a schematic illustration of an alternative embodiment of blade guide arms in a final position;
Figure 14 is a schematic illustration of blade attachment guide rods;
Figure 15 is a schematic illustration of the rotor hub showing the blade attachment rods and receptacle
Figure 16 is a close up view of the blade attachment guide rods shown in Figure 14;
Figure 17 is a schematic illustration of the rotor hub showing the blade attachment rods;
Figure 18 is a close up view of the receptacle for the blade attachment guide rods shown in Figure 17
Figure 19 is an alternative embodiment of the receptacle for the blade attachment guide rods; and
Figure 20 is a schematic illustration of the receptacle in position.

### SUMMARY OF THE INVENTION

The invention is defined in the independent claims to which reference should be made. Advantageous features are set forth in the appendent claims.

In a first aspect, the invention provides a wind turbine apparatus for releasably attaching one or more wind turbine blades to a wind turbine rotor hub, comprising: a first and a second support arm mounted on the wind turbine tower, and having connectors for making a secure releasable connection with an individual wind turbine blade at one or more respective connection points; the first and a second support arms having an extended position and a stowed position, wherein in the extended position the first and a second arms extend from the tower and support the wind turbine blade in a position for connection to the wind turbine rotor hub, and wherein in the stowed position the first and a second arms lie close to the tower and support the blade in a stowed position against the tower; a winch or pulley having a cable for attachment to the blade root, such that when the wind turbine blade is detached from the wind turbine rotor hub, at least part of the weight of the wind turbine blade is supported on the cable, wherein the first and a second support arms are both located towards an upper region of wind turbine tower and arranged to support the wind turbine blade at one or more respective connection points closer to a blade root portion of the blade than to a blade tip portion.

The arms advantageously stow the blade against the wind turbine tower when the blade has been detached from the rotor hub. The blade can be held in this position for extended periods of time, such as during a maintenance operation on the rotor hub, or during transport of the wind turbine to an installation location. Furthermore, the arrangement of the arms and their movement between the extended and stowed position stably guides the blades from its operating position where it is connected to the hub and its stowed position. The winch or pulley and cable means that the weight of the blade can be supported by lifting apparatus situated in the nacelle or provided on or adjacent the wind turbine tower. This means that all of the equipment required to manoeuvre and stow the blades can be provided in the wind turbine tower, and there is no requirement for additional equipment to be brought to the installation or repair site by separate vessel.

Furthermore, both of the first and second arms are located in the upper half of the blade where the blade is heaviest, and where the supporting effect of the arms is most beneficial. This is particularly useful for heavy wind tubine blades of the type envisaged here.

Advantageously, the one or more respective connection points may be located in the vicinity of the centre of gravity of the wind turbine blade. This increases the efficacy of the support.

In one embodiment, the first and second arms are in their extended positions, the wind turbine blade is orientated so that an engagement surface at the blade root is aligned with an engagement surface of the blade root bearing on the blade rotor hub. This facilitates connection of the blade to the hub and detachment of the blade from the hub.

In one embodiment, the second arm is mounted lower than the first on the wind turbine tower, and wherein when in their extended positions, the second arm is operable to extend further from the wind turbine tower than the first arm. The further extension of the second arm causes the blade to angle slightly away from vertical and substantially into an orientation suitable for operation and attachment to the hub.

In one embodiment, the connectors are mounted on a moveable bearing that can be controlled remotely for adjusting the orientation of the connectors with respect to the arms. This allows a service engineer to adjust the angle of the connectors with respect to the arms and blades to facilitate the releasable connection.

In one embodiment, the second arm is articulated, and has first and second sections, and wherein in the stowed position, the second arm is at least partly folded for better storage of the arm against the tower.

Further, the arm may comprise a first bushing section attached to the tower at which the second arm is pivotally connected via the first section; and a second bushing section attached to the tower below the first, such that in the stowed position the second arm is arranged to hang downwards with the first section supported by the first and second bushing.

Additionally, the second section may be is hinged on the first section, and the connector for connecting to the wind turbine blade is located at the end of the second section, such that in the stowed position the second section extends from the tower to support the wind turbine blade.

This provides a stable support for the second arm when it is in its stowed position, and so facilitates the storage of the blade on the tower, and additionally supports the blade away from the tower.

In a further alternative, the apparatus comprises a bushing attached to the tower at which the second arm is pivotally connected via the second arm first section; wherein the second arm second section is hinged on the second arm first section, and wherein the connector is located at the hinge between the first and the second sections, such that in the extended position the second section lies substantially along the longitudinal axis of the blade, and the first section of the second arm supports the wind turbine blade away from the tower; the second section comprising a connection portion for attaching to the blade near the connection point for the first arm. The end of the second section of the second arm may be attached by a hinge to the first arm.

In this way, the arm can therefore connect to and support the blade over an extended portion of its length, providing a more stable connection.

In a further embodiment, the apparatus comprises: first and second pivot mountings for the first arm, attached to the wind turbine tower and angularly displaced around the circumference of the tower from one another; wherein the first arm is tapered and comprises: first and second angled side sections, pivoted on the tower at the respective first and second pivot mountings; an apex section joining the angled side sections to form an apex; and wherein the connector is mounted on the apex portion. The use of an A frame shaped arm can provide additional support to the blade at a location closer to the blade root than the second arm, by spreading the blade load across the two cooperating support members forming the arms.

In one embodiment, the connectors of each of the one or more support arms cooperate with complementary connectors on the wind turbine blade to keep the arms at a fixed orientation to the longitudinal axis of the wind turbine blade. Preferably the fixed orientation is 90 degrees as this is most stable.

In one embodiment, the complementary connectors on the wind turbine blade comprise a tapered compartment for guiding the connectors of the arms into an engagement position for connection. This allows a service engineer to guide the connectors into position and facilitate the releasable connection.

The connectors of the one or more arms may be received by complementary connectors attached to the spar of the wind turbine blade, as this part of the blade may provide the most structural support.

The blade preferably comprises a releasable blade surface portion for accommodating the one or more arm connectors when they are received by the complementary connector in the blade. This can be in the form of a hatch that can be opened or in the form of a resilient blade surface that permits entry of the connector via a perforated section.

In one embodiment, the first and second connection points are disposed on opposite sides of the centre of gravity of the blade along a substantially longitudinal blade axis. This allows the two arms to support the blade without the blade stably being subject to unwanted torque arising from the interaction of the weight of the blade and the point of connection.

In one embodiment therefore, the first and second connection points are located equidistant from the centre of gravity. It is also possible to that the first and second connection points are located at different distances from the centre of gravity to provide a bias to the blade as it hangs.

The apparatus may also comprise a blade tip support section located on the tower below the first and second arms to receive the blade tip when the wind turbine blade is in the stowed position, and prevent the tip from oscillating in the wind. The blade tip connector section may comprise a connector for making a secure releasable connection with a wind turbine blade tip at one or more respective connection points. The blade tip support section may also comprise an inflatable member.

The winch or pulley can be located in the rotor hub where it is most accessible to the service engineer. However, in other embodiments it can be preferable to locate it outside of the rotor hub, as in this position the line of force provided by the cable to the blade is more advantageously positioned.

The apparatus may comprise a motor for providing a pulling force to the cable.

Further, the apparatus may comprise a drive system for driving the one or more arms between the stowed and extended positions. In this way, the arms can be used to support the weight of the blades as they are lifted between the stowed and the operating positions.

The invention also provides a method of releasably detaching one or more wind turbine blades from a wind turbine rotor hub for maintenance, comprising: connecting one end of a cable to the blade root section of the wind turbine blade, while it is secured to the wind turbine rotor hub, the other end of the cable connecting to a winch or over a pulley; connecting to the wind turbine blade one or more support arms, mounted on the wind turbine tower for movement between an extended position in which the one or more arms extend from the tower and support the wind turbine blade in a position for connection to the wind turbine rotor hub and a stowed position in which the one or more arms lie close to the tower and support the blade in a stowed position against the tower; detaching the wind turbine blade from the wind turbine rotor hub, such that it is supported by the cable and/or the one or more support arms; lowering the wind turbine blade using the cable until the one or more arms adopt their stowed position against the tower. The first and a second support arms are both located towards an upper region of wind turbine tower and arranged to support the wind turbine blade at one or more respective connection points closer to a blade root portion of the blade than to a blade tip portion.

In a further aspect, the invention provides a method of releasably attaching one or more wind turbine blades from a wind turbine rotor hub for maintenance, comprising: connecting one end of a cable to the blade root section of the wind turbine blade, while it is in a stowed position and supported on one or more support arms, mounted on the wind turbine tower for movement between an extended position in which the one or more arms extend from the tower and support the wind turbine blade in a position for connection to the wind turbine rotor hub and a stowed position in which the one or more arms lie close to the tower and support the blade in a stowed position against the tower, wherein the other end of the cable is connected to a winch; raising the wind turbine blade towards the rotor hub, by means of the cable and/or the one or more support arms until the one or more support arms adopt their extended position; securing the wind turbine blade to the wind turbine rotor hub; releasing the cable and the one or more support arms from the wind turbine blade; restoring the one or more support arms to their stowed position. The first and a second support arms are both located towards an upper region of wind turbine tower and arranged to support the wind turbine blade at one or more respective connection points closer to a blade root portion of the blade than to a blade tip portion.

### DETAILED DESCRIPTION OF THE PREFERRED EMBODIMENTS

The application relates to an apparatus for and a method of mounting wind turbine blades on a wind turbine tower and hub. One or more extendable arms having a stowed and an extended position are provided on the wind turbine tower. The arms are operated between the two positions by means of an actuation mechanism or a cable attached to a wind turbine blade supported on the arms. In their fully extended position, the arms are attached to the wind turbine blade in its connected position with the hub. A cable is attached to the blade, and the blade detached from the hub. The blade is then lowered on the arms into a stowed position against the wind turbine tower, where it can be secured and the cable can be released. The blades can be reattached to the hub by attaching the cable to the blade and lifting the blade in position. The arms pivot to support the blade in a position maintaining a correct orientation for attachment.

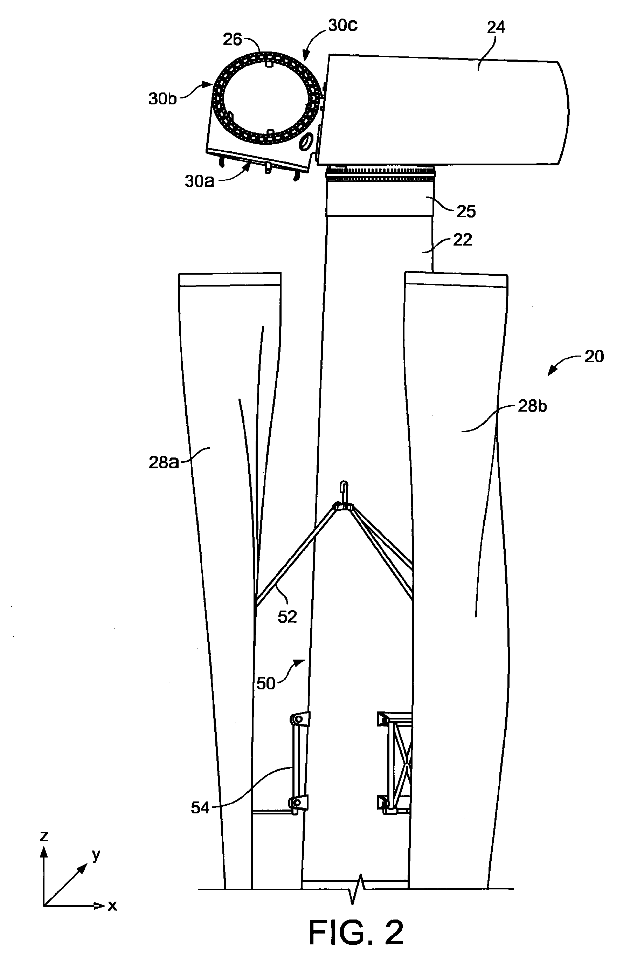

Figures 2, 3 and 4 illustrate a wind turbine 20 according to an embodiment of the invention, in which the tower of the wind turbine is provided with guide arms for moving the wind turbine blades between an operating position in which they are connected to the rotor hub, and a stowed position in which they are detached from the rotor hub and stored against the wind turbine tower.

Figure 2 is a side elevational view of the upper section of the wind turbine tower 22, having a nacelle 24 and rotor hub 26. The nacelle 24 can be mounted on the top of the tower 22 via a yaw drive 25, which allows the nacelle and the rotor hub 26 to be angled into or out of the direction of the prevailing wind.

The wind turbine 20 has three wind turbine blades 28a, 28b, and 28c, which in Figure 2 are shown as detached from the rotor hub 26 and in their stowed position against the tower 22. In their stowed position, the blades 28 are supported in a substantially parallel relationship with the tower 22. It is not strictly parallel as it is convenient to have the blade tips secured against the blade tower 22 at a lower position. Although, the blades 28 are not themselves necessarily strictly straight it will be appreciated that it is convenient to speak about their orientation with respect to the longitudinal axis 27.

When the blades 28 are viewed in their stowed position, the rotor hub's blade root bearings 30a, 30b and 30c, at which the blades 28a, 28b and 28c can be mounted on the rotor hub 28, can be seen in more detail. It will be appreciated that the blade root bearings 30a, 30b and 30c, and therefore the blades in their attached position, are mounted on the rotor hub so that they are equally angularly spaced around the hub's axis of rotation. In the example of Figure 2, assuming a vertical z axis, and right handed x and y axes arranged in the horizontal plane, the axis of rotation is along the x direction, and the first blade root bearing assembly 30a is shown facing in the negative z direction, with the second 30b and third 30c shown as lying substantially along the y axis. This means that the blade root bearing assembly 30c is facing into the page and cannot be seen.

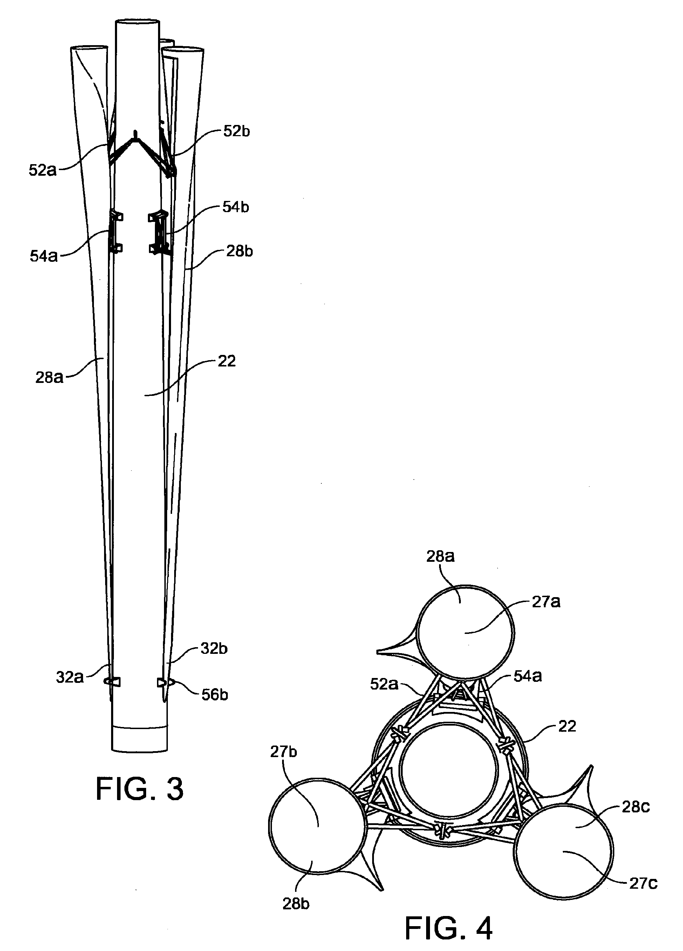

The blades 28a, 28b and 28c are each supported by an arm arrangement 50a, 50b and 50c, comprising an upper arm 52a, 52b and 52c and a lower arm 54a, 54b, and 54c. As shown in Figure 3, the arm arrangements 50a, 50b and 50c are located towards the upper part of the tower 22, and the blade tips 32a and 32b are therefore also secured further down the length of the tower by blade tip rest sections 56a, 56b and 56c (not shown). The arm arrangements 50a, 50b and 50c, and the blade tip rest sections 56a, 56b and 56c are located at an equal angular separation around the circumference of the tower 22. Figure 4 shows this arrangement in more detail as a cross-sectional view through the tower 22 and the three blades 28a, 28b and 28c. In this view, only the upper 52 and lower 54 arms can be seen. The arrangement of blades against the tower as shown in Figure 4 can be advantageously used during transport of the tower 22 to the offshore installation location.

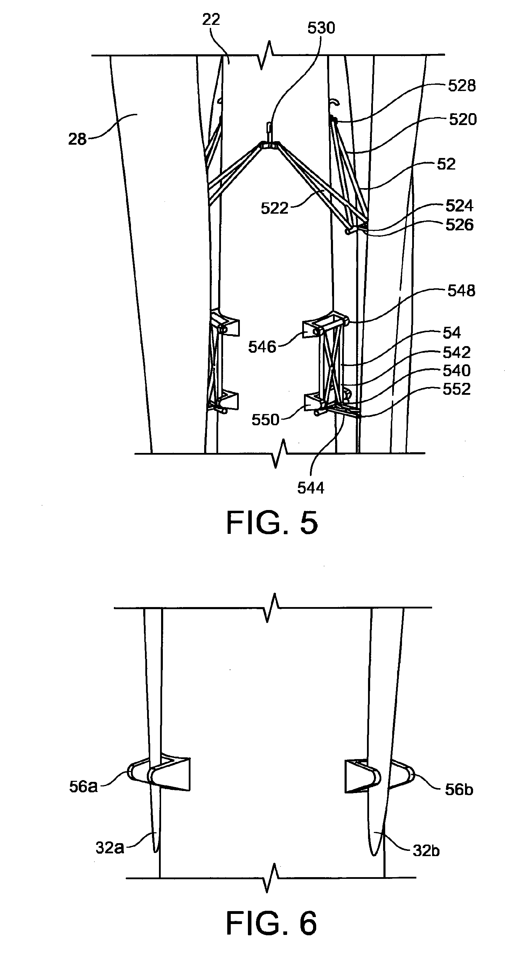

The structure of the upper 52a, 52b and 52c and lower 54a, 54b, and 54c arms is shown in more detail in Figure 5 to which reference should now be made. For convenience in the following discussions the interaction of a single arm arrangement and its interaction with a single blade will now be described so that it will not be necessary to enumerate in each case the reference numeral suffixes a, b and c.

The upper arm 52 is substantially triangular or trellis-shaped, having opposing sides 520 and 522 meeting at a tip or apex 524. The tip of the triangular arm 52 is provided with a connector 526 for making a secure, releasable mechanical connection to the blade 28. This will be explained below in more detail.

As shown in Figure 5, each opposing side 520 and 522 of the arm 52 is connected to the tower 22 by a pivot 528 and 530, allowing arm 52 to move between lower and upper positions. As will be appreciated from Figure 5, the apex 524 of the arm 52 is actually provided as a rod and each of the opposing sides 520 and 522 are in fact composed of triangular frames, having a base in common with the rod forming the apex 524, and respective apex located at the pivots 528 and 530. The additional triangular shape of the opposing sides is adopted in this example as it forms a strong frame for the arm 52, which in use must be capable of bearing at least some of the weight of the blade. The base of the triangle or trellis shape is omitted to accommodate the curve of the tower 22.

As shown in Figure 5, the lower arm 54 has a different construction to the upper arm 52, most notably in that it is an articulated arm having an intermediate joint or elbow 540. In this example, the lower arm 54 is also not triangular, but instead comprises first and second rectangular frame sections 542 and 544 connected to one another at the joint 540. The first frame section 542 is connected to the tower 22 at a hinge 546 that allows it to lie substantially downwards against the tower 22 when the arm is stowed. For this reason, the hinge 546 is supported on a bushing 548 so that the hinge is supported slightly away from the tower, and the curvature of the tower will not prevent the first frame section 542 from hanging vertically downwards.

A second bushing 550 is provided on the tower 22 below the first, for receiving the other end of the first frame section 542 and for stably supporting the frame section in a rest position, when the blades 28 are stowed. The first frame section 542 extends slightly below the second bushing 550 so that the joint 540 provided on the end of the first frame section 542 can move unhindered.

The second frame section 544 connects to the first via the joint 540 and is arranged to pivot in the same direction as the first frame section 542. The movement of the second frame section about the joint 540 can be limited, so that the angle between the first and the second frame section is not more than 180°. In this way the lower arm 54 and the movement of the first and second frame sections around the joint or elbow 540 is similar to the articulated movement of the human arm. In the stowed position of the blade, the first frame section 542 of the lower arm 52 hangs downwards, while the second frame section 544 extends from the tower at an angle of about 90° to the first frame section 542.

The connection between the second frame section 544 and the wind turbine blade 28 can be made in the same way as for the upper arm 52, using a connector 552 (which may be the same construction as 526 above). This will now be described in more detail.

The connection between the upper 52 and lower 54 arms and the wind turbine blades 28 can be made by any suitable mechanical connection. It will be appreciated however that any connection must be capable of supporting the weight of the blades 28 and be easy to attach and detach in operation. Furthermore, the presence of a connection location must not unduly affect the aerodynamic properties of the blade when it is in use on the rotor hub.

This is achieved by providing compartments in the wind turbine blade surface for receiving the connector apparatus 526 and 552 of each arm 52 and 54. The blade compartments have a cover that can be opened to accommodate the connector apparatus, or closed when the blades are in use to ensure a smooth aerodynamic surface for the blade. The compartment cover can therefore be operated using an electrical circuit or optical signalling system allowing remote control.

In this example, the compartments comprise a corresponding mating connector for the connector apparatus 526 and 552 so that a strong, secure connection can be formed. The corresponding mating connectors are preferably attached to a supporting structure within the blade, such as the main spar, or alternatively pass through the blade to join with a corresponding pairwise connector on the opposite blade surface.

Suitable connector apparatus are known, and are described in US2007/ 0258823 for example, in the name of the applicant

The blade tip rest sections 56 will now be discussed in more detail and with reference to Figure 6. Unlike the arm arrangements 50, the blade tip rest sections 56 are not required to bear much, if any, of the weight of the blades 28. In this way, the blade tip rest sections 56 can, in one embodiment, simply be provided with shoulders or lateral supports for receiving the blade tip and restricting any sideways motion that may occur as wind induced stresses and strains can cause the blade to deform or twist. In alternative embodiments, connection means for attaching the blade tip 32 to the blade tip rest section 56 could be provided so that the connection is more secure. The connection means can include the connector apparatus used for the arms above, or other connector apparatus such as a magnetic band, or cable to secure the tip in place.

A further embodiment for the blade tip rest section 56 comprises an inflatable member for attachment to the blade tip and to the tower. A suitable inflatable member is an inflatable ring that can be threaded over the end of the wind turbine blade. It is advantageous if the inflatable member is releasably detachable from the wind turbine tower, so that when it is needed it can be released from the tower and threaded over the detached wind turbine blade. As the blade is lowered into its stowed position by means of the upper and lower arms, the inflatable member can be reattached to the tower to hold the blade tip in place. The connection between the inflatable member and the tower can be a via a secure cable, cord or bolt that is passed through a reinforced wall section of the member and a suitable mating point on the tower. Preferably, the connection can be released remotely so that an engineer in the nacelle can release the connection without having to climb down to the tower position where the inflatable member is located. A magnetic or electro magnetic connection is particularly useful in this regard, If desired, the inflatable member may be deflated once removed from the tower so that it can be fitted over the blade tip more easily, and subsequently reinflated.

The inflatable member can any suitable shape for cushioning and supporting the blade tip when the blade is in the stowed position. In particular, it may be an annular ring, or a disc or other solid shape with a cut out for receiving the blade tip. The cut out may also be shaped so that its profile matches the tip more closely.

In an alternative embodiment, the inflatable member could be C-shaped, or any profile in which a wider internal cut-out for receiving the blade tip is accessed by a narrower opening portion through which the blade tip must first pass to reach the internal cut out. This inflatable member need not be detached from the tower during use, but could instead remain inflated or partially inflated to receive the tip when the blade is moved into the stowed position by the support arms.

Longitudinal inflatable members located on either side of the rest position of the blade tip in the stowed position could also be used to bolster the blade and prevent lateral movement.

We have appreciated that the positioning of the upper 52 and lower 54 arms when they are connected to the wind turbine blades 28 is of considerable importance, as with careful consideration the arms can be used not only to support the blades in their stowed position, but also to act as guides for facilitating connection of the blades 28 to the rotor hub 26.

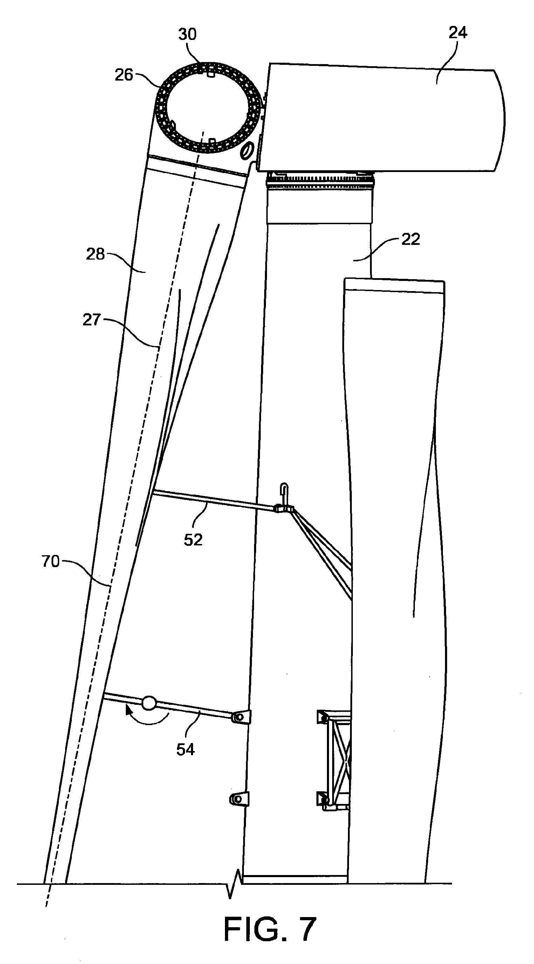

Referring now to Figure 7, the connection points for the connector apparatus 526 and 552 of the arms on the blades 28 are positioned with respect to the blades centre of gravity. In Figure 7, the centre of gravity of the blade is illustrated schematically as CoG position 70. In this example the connection positions for the upper and lower arms are located equidistant from the CoG position 70, as this distributes the loading due to the weight of the blade substantially equally on the upper and lower arms, and means that the handling of the blade 28 when it is being attached or detached from the arms is more stable. It will be appreciated that if one of the arms is further away from the CoG position 70 than the other, the blade could pivot around one of the arms during handling.

The lengths of the upper 52 and lower 54 arms are also selected to assist in stable handling of the blade during connection and disconnection of the blade to the rotor hub 26. First, in order to enable the mounting of the blade 28 on the rotor hub 26 to be as straight as possible, the arms are arranged to be substantially perpendicular to the longitudinal axis 27 of the blade 28 at their connection point when the arms are fully extended from the tower 22.

The fully extended lower arm 54 in which the first and second frame sections 542 and 544 lie along a straight line, is longer than the upper arm 52, so that the blade tip 32 is angled further away from the tower 22 than the blade root. This ensures that the blade 28 is close to the operating orientation it will adopt when attached to the blade root bearing assembly 30 which both facilitates the connection of the blade 28 to the blade root bearing assembly 30, and makes the handling of the blade 28 in intermediate positions more stable. As shown in Figure 7, the upper and lower arms 52 and 54 when fully extended are arranged to support the blade 28 so that its longitudinal axis (indicated as dashed line 27 in Figure 7) is aligned with the centre of the blade root bearing assembly 30 and so that the blade root edge lies approximately parallel to the blade root bearing to facilitate attachment.

When detaching the blades 28 from the blade root bearing, and so that the blade 28 can be rotated into the stowed position where it is substantially parallel with the tower, the upper arm 52 of this arrangement must extend from the tower 22 by a larger amount than the lower arm 54, when the arms are fully retracted. This is achieved by constructing the second arm as jointed first 542 and second 544 frame sections that pivot at elbow 540. Thus, in its fully retracted position, the lower arm, 54 extends from the tower substantially only by the length of the second frame section 544.

In this example, although the connection positions are arranged equidistant from the CoG position 70, in alternative embodiments the position of the arms may be adjusted to give the blade 28 a rotational bias when it is suspended on the arms 52 and 54.

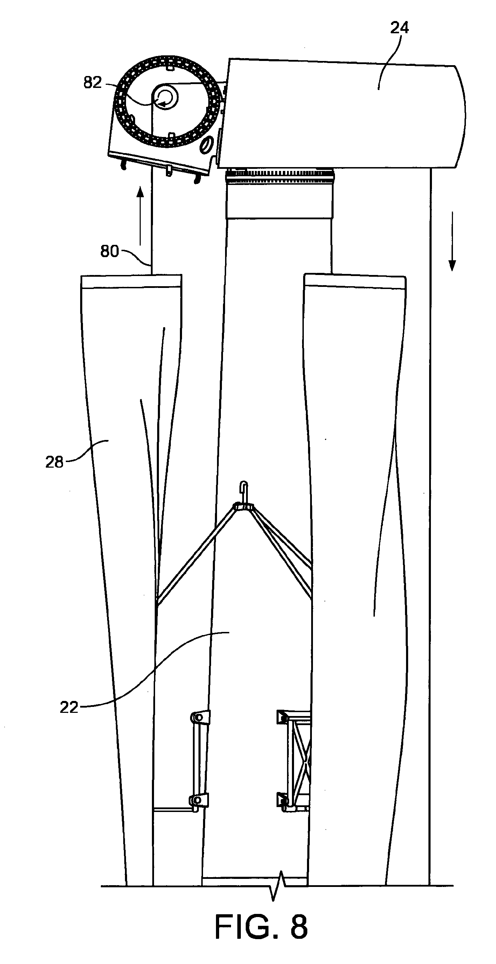

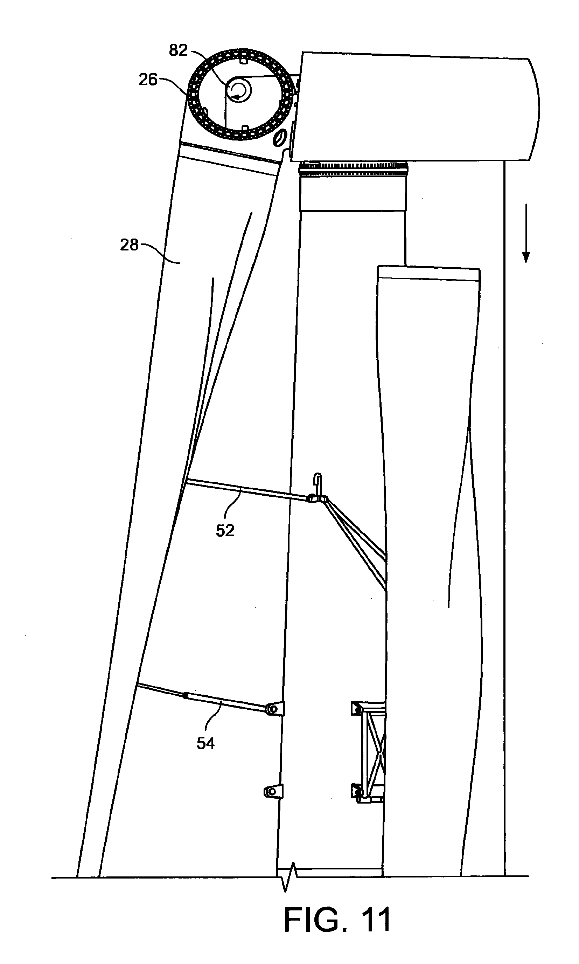

The procedure for attaching a blade 28 to the rotor blade hub 30 using the apparatus discussed above will now be described with reference to Figures 8 to 11.

Figure 8 illustrates a starting position, in which the blade 28 is in its stowed position against the tower. In this position, the upper arm 52 extends from the tower 22 at an acute angle, and the second frame section 544 extends from the tower perpendicularly, while being supported on the bushing 550. The first frame section 542 of the lower arm 54 is parallel to the tower 22.

A cable 80 is connected to a suitable point on the blade 28, such as at the blade root, and suspended from a winch or pulley 82 provided in or on the hub 26. The cable 80 passes over the winch or pulley 82. In Figure 8, the winch or pulley 82 is shown passing inside the hub 26, although it may be installed at other locations, such as on the front or on the top of the hub 26. The illustrated position is preferred as it makes maintaining the alignment of the blade 28 with the blade root bearing assembly 30 more straightforward.

In embodiments where a winch is used, a motor (not shown) provides the motive power to the winch 82 to support the blade 28 when detached from the blade root bearing assembly 30, and lift the blade towards the hub 26. Where a pulley 82 is used, the pulley merely provides a pivot for the cable 80, and the cable is then fed back into the nacelle 24 where a motor or winch can be more easily located. It is not necessary to use a winch, and a counterweight could be used instead. In the example shown in Figure 8 for example, the cable is fed through the nacelle 24, over a pivot at the nacelle rear, and downwards to a blade counterweight (not shown). A number of different arrangements are possible for the winch or pulley 82, and will be apparent to the skilled person. In particular, the winch may be located inside the rotor hub for ease of access by an engineer, or outside the hub, which position is preferred for the resulting orientation of the blade. The motor could be located in the nacelle of the wind turbine generator, or at another location in the tower, including the interior or exterior at the base of the tower.

The cable 80 may or may not provide the entirety of the lifting force to raise the wind turbine blade, and the arms 52 and 54 themselves can advantageously comprise electric or hydraulic drive means for moving them between their extended and stowed positions while bearing the wind turbine blade. A control system located in the wind turbine, such as in the nacelle or tower can be used to operate the arms as desired. Advantageously, the tower provides an access hatch for a service engineer to access the arm hinges and carry out maintenance if desired. In one embodiment, the arms 52 and 54 could provide the entirety of the force required to bear the weight of the wind turbine blade, with the cable 80 being used as an additional guide.

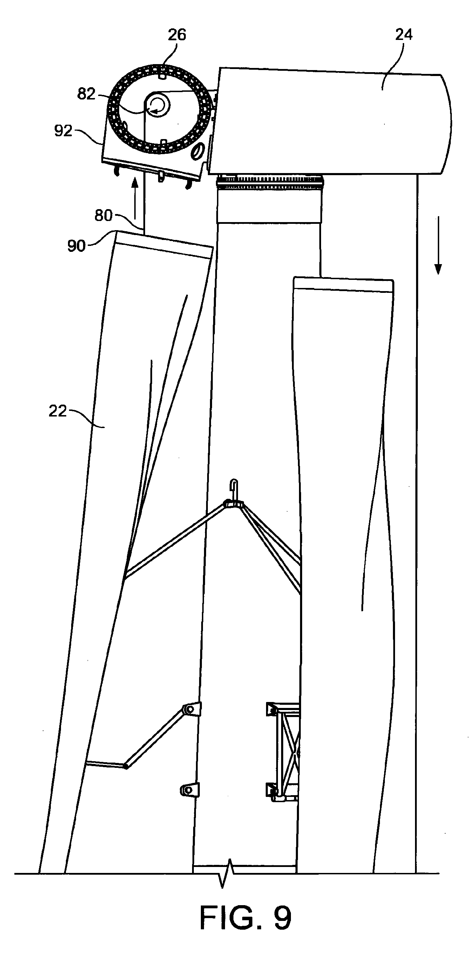

In Figure 9, the winch 82 pulls on the cable 80 to raise the blade 28 towards the blade root 30. As the blade 28 rises upwards, the upper 52 and lower 54 arms are also pulled upwards and so begin to extend further from the tower 22. As noted above, the arms 52 and 54 may also provide a force to lift the blade into position, allowing the cable 80 to perform more of a guide function in positioning the blade on the hub.

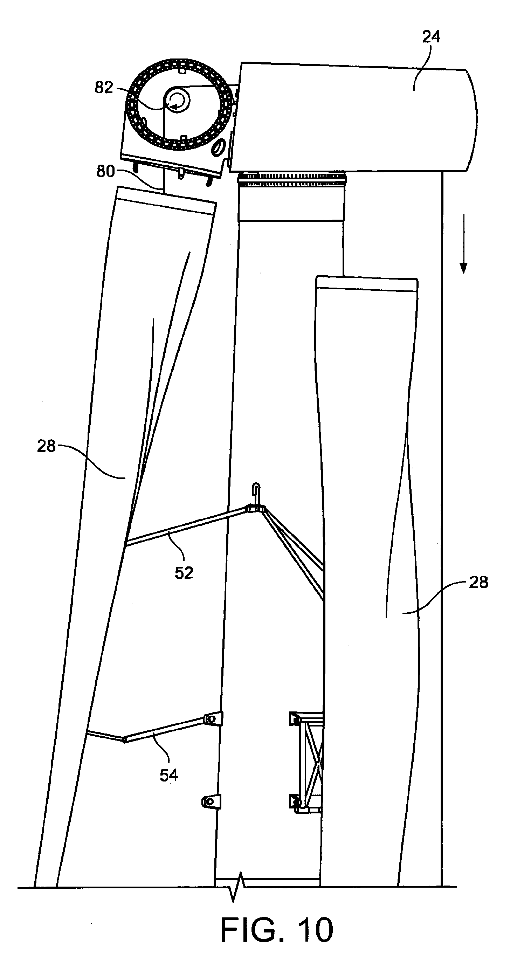

In Figure 10, the blade 28 is shown closer to the blade root bearing assembly 30 and the arms are more fully extended. As the arms extend, they support the blade 28 away from the tower and therefore angle the blade 28 so that the rim of the blade root on the blade is aligned with the rim of the blade root bearing assembly 30 on the hub 26.

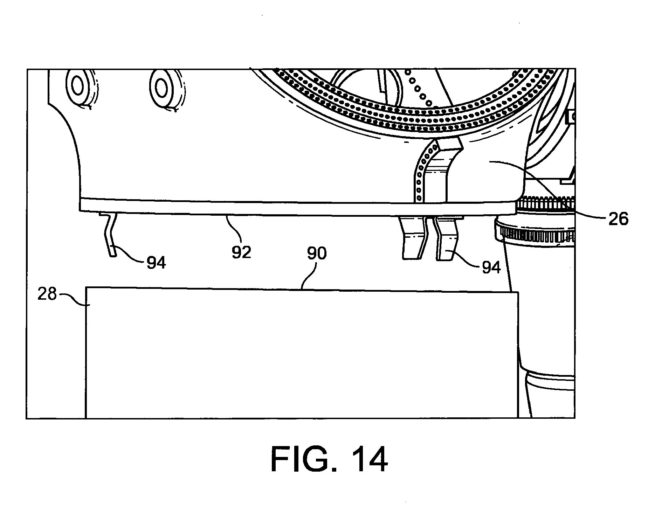

As the winch 82 continues to pull the blade 28 towards the hub 26, the blade 28 finally reaches a position where the rim 90 of the blade root engages with the rim 92 of the blade root bearing. In this position, the upper 52 and lower 54 arms are fully extended and hold the blade 28 stably in position at the blade root bearing. In this position, a service engineer in the hub 26 can make the necessary mechanical connections to fix the blade 28 in place, while the blade is supported. Figures 8 to 11 further illustrate apparatus attached to the blade root bearing assembly 30 (and visible on the rim 92) which cooperates with complementary apparatus inside the blade root and ensures that the blade 28 is positioned correctly when it is received at the hub 28. This will be described later with reference to Figures 14 to 18.

Once the blade 28 is secured in position against the rotor hub 26 blade root bearing assembly 30, the arms 52 and 54 are detached from the blade 28 and are lowered into a stowed position against the tower. For this reason, the arms are also advantageously provided with a control system that enables the connection with the blades 28 to be broken, and the arms to be moved between their fully extended position and fully stowed position.

In embodiments where the arms 52 and 54 are not powered, then the cable 80 can be used to lower the arms safely into their stowed position.

Once a blade 28 is attached, the nacelle 24 can be rotated so that the hub 26 is now located directly above the next blade 28 for attachment. The hub 26 is the rotated so that the blade root bearing is facing the next stowed blade 28 and the process illustrated in Figures 8 to 11 is repeated.

Detaching blades involves a similar process. The hub 26 is rotated into a position in which one of the blades 28 is hanging directly downwards, and the nacelle 24 is rotated so that the blade 28 is lined up with an available arms arrangement 50 on the tower 22. The arms 52 and 54 are then brought into in their extended position where they can engage with the rotor blade 28, while the cable 80 is attached to a suitable connection point in the blade, such as at the root of the rotor blade. Either the arms or the cable or both then support the weight of the blade as it is detached from the hub 26.

Connecting the arms 52 and 54 to the one or more connection points on the rotor blade can be achieved in a number of ways. In one embodiment, the arms 52 and 54 are powered and can be activated from the nacelle by a service engineer. Providing the rotor blade is angled downwards, towards the six o'clock position the arms can be activated so that they move from their stowed position into a position ready to engage with the rotor blade. The connection points are located on the blades at positions that correspond to the positions adopted by the arms when they are activated. So, once the blade is in the six o'clock position, the service engineer knows that the arm connector apparatus 526 and 552 are located close to the appropriate connector mating connections in the blade. The service engineer can then activate the arms to engage the blade and make the connection.

In one example, the compartments in the blade are tapered, having a large opening near the blade surface and narrowing as they extend into the blade interior. The large opening provides tolerance for the connector apparatus 526 and 552 on the arms 52 and 54 to be received in the blade in the vicinity of the mating connectors, without there being an initial need for perfect alignment of the connecting parts. In normal usage, the opening of the tapered compartment is covered by the blade outer shell.

Once the connector apparatus is located inside the tapering compartment, the tapering portion guides the connector apparatus 526 and 552 to the mating connectors internal to the blade. During this process, the blade may naturally move slightly under action of the arms 52 and 54 in order to accommodate the connector apparatus 526 and 552. The connector mating apparatus in the blade may therefore comprise a latch mechanism, so that once the connector apparatus has adopted the correct position to engage, it is latched in place. Such a latch may be engaged mechanically or electrically. It is preferable, if the latch is releasable electronically, so that the release operation can be carried out remotely.

The compartment need not solely be tapered in order to guide the connector apparatus 526 and 552 towards the corresponding mating connector, and other shapes such as narrowing curves or stepped surfaces could also be used.

If desired, the connector apparatus 526 and 552 provided on each arm 52 and 54 can be carried on a moveable bearing, operable remotely by the service engineer in the nacelle or in the tower and permitting some degree of motion of the connector apparatus 526 and 552 with the arms 52 and 54. This allows the service engineer to guide the connector apparatus towards the blade using the coarse movement of arms 52 and 54, and the finer movement of the moveable bearings.

The blade 28 is then detached from the blade root bearing assembly 30 so that its weight is borne on the cable 80 and, to a lesser extent, the arms 52 and 54. The cable 80 is then slowly let out on the winch 82 and the blade 28 is lowered towards its stowed position. The arms 52 and 42 gradually fold towards the tower and are locked into place by a mechanical or electrical system once the blades are fully lowered.

The apparatus described above can also be used in maintenance operations, such as where work is to be carried out on the blade root or blade connection ring on the hub. One particular maintenance operation that could be carried out is for example the replacement of the blade bearing ring from its attachment position at the blade root. In this case, while the blade is supported on the arms either in the extended position or in their stowed position, the blade bearing ring can be repaired or detached from the blade and replaced. If this operation is carried out in the extended position then it can be useful if the arms can be locked into position to provided additional support. Otherwise, the blade can simply be supported on the cable, or by the powered arms.

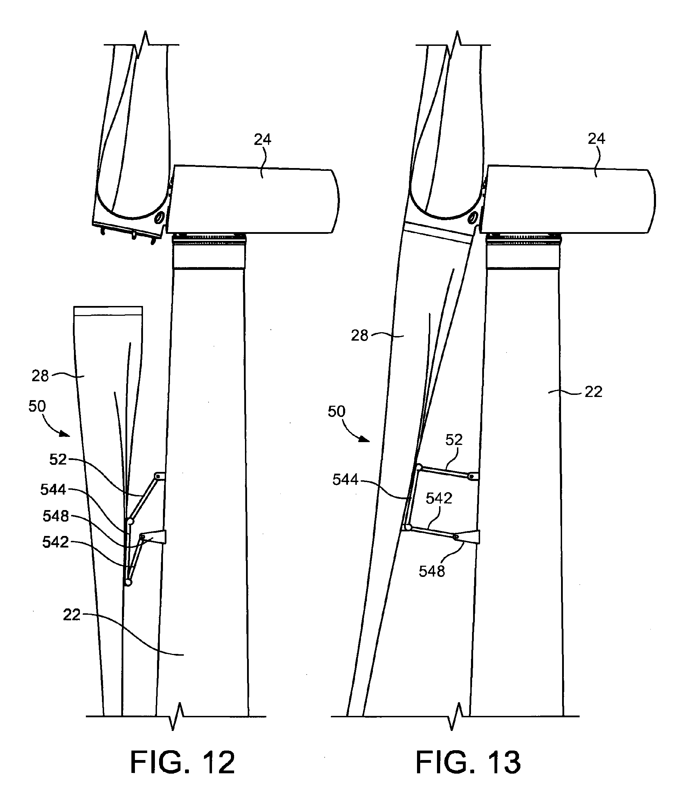

In the example described above, the upper 52 and lower 54 arms mostly provided support for the blade 28, which was pulled towards the hub 26 by the winch 82. In alternative examples, the winch 82 may be omitted, and the arms themselves used to provide the motive power for detaching and attaching the blades. Such an example will now be described with reference to Figures 12 and 13.

As before, an arm arrangement 50 is provided on the tower 22 for supporting the blades 28, comprising an upper 52 and a lower arm 54. The arms in this example are provided with a hydraulic or electric power system for bearing raising weight of the blade 28. Further, the hinging of the arms is adapted slightly.

The lower arm 54 is mounted on a bushing 548 slightly away from the tower 22, and comprises first 542 and second sections 544, the first section pivoting about the bushing 548 and the second section 544 pivoting around the first 542. When connected to the blade 28, the second section 544 of the arm 54 lies along the blade edge, thereby providing an increased support for the weight of the blade. Preferably, the second section 544 extends along the blade 28 and joins the location at which the upper arm 52 is connected to the blade.

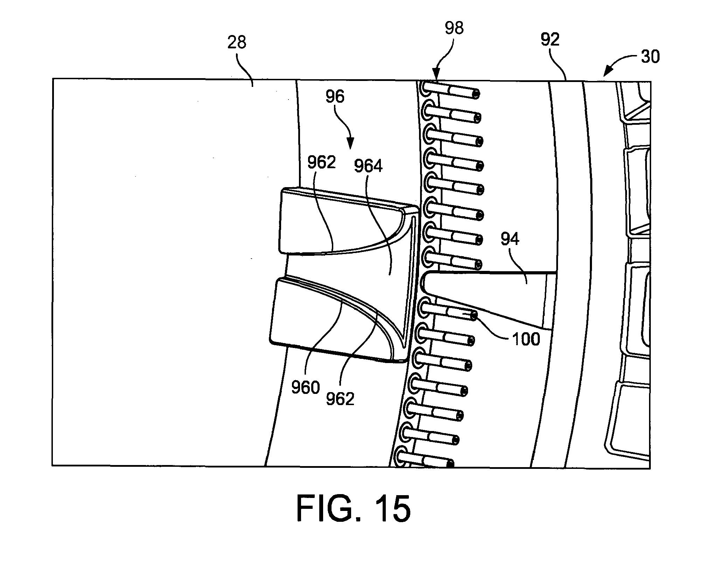

Figures 14 and 15 illustrate apparatus for guiding the blade 28 into a correct position for connection with the blade root bearing rim 92. In Figure 14, the blade root bearing assembly 30 is illustrated from the side, and can be seen to bear one or more guide rods or pins 94 on the rim 92. These are preferably made from a metallic material similar to the bearing rim 92, so that they are durable and will resist any compressive or shearing forces where they come into contact with the blade 28 as it approaches the hub 26.

As shown in Figure 15, the guide rods 94 cooperate with a complementary socket-like section 96 provided on the root of the blade 28. For the purposes of the discussion here, the blade root can be thought of as a substantially cylindrical section having at a substantially circular terminating flange 98 for engaging the blade root bearing assembly 30 on the hub 26. A plurality of metal bolts 100 extend from the flange 98 and must be secured to corresponding holes in the blade root bearing assembly 30. In some designs of wind turbine bearing, there can be as many as 180 bolts to correctly align with a corresponding 180 holes in the bearing assembly 30, and with clearance of only say 3mm between the bolt and the hole in which it is received. It will be appreciated that even a small discrepancy in alignment between the flange 98, the bolts 100 and the corresponding holes in the blade root bearing assembly 30, will prevent the blade 28 from engaging with the bearing assembly 30, and in the worst case, may result in damage to the bolts or the bearing assembly 30 itself. The problem of alignment is aggravated by the weight of the blades, which in the example described here can be of the order of 30 tons or more. The guide rods 94 and the socket-like section 96 are therefore provided on the blade root and bearing assembly 30 so that when the guide rods 94 are received in the socket 96 the blade will be correctly aligned, avoiding damage, and saving time during assembly.

The socket like-section 96 is therefore located in the interior of the blade root adjacent the flange 98. In the example shown, the socket-like section 96 is comprised by a tapered groove 960, defined by shoulders 962, with a wider opening 964 for receiving the guide rod 94. As the distance between the flange 98 and the blade root bearing assembly 30 and the flange 98 draw closer together, the guide rod 94 can therefore first be positioned in the wider opening 964 with some tolerance. As the clearance between the flange 98 and the bearing assembly 30 is reduced the guide rod 94 engages the shoulders 962 and is moved towards the centre of the tapered groove 960 until is fully received between both shoulders 962. For this reason, the guide rod 94 also has a tapered shape to cooperate with the shoulders 962 and the tapered groove 960. The guide rods 94 and the socket-like section 96 therefore act together to rotate the blade 28 into the correct position for attachment against the blade bearing assembly 30.

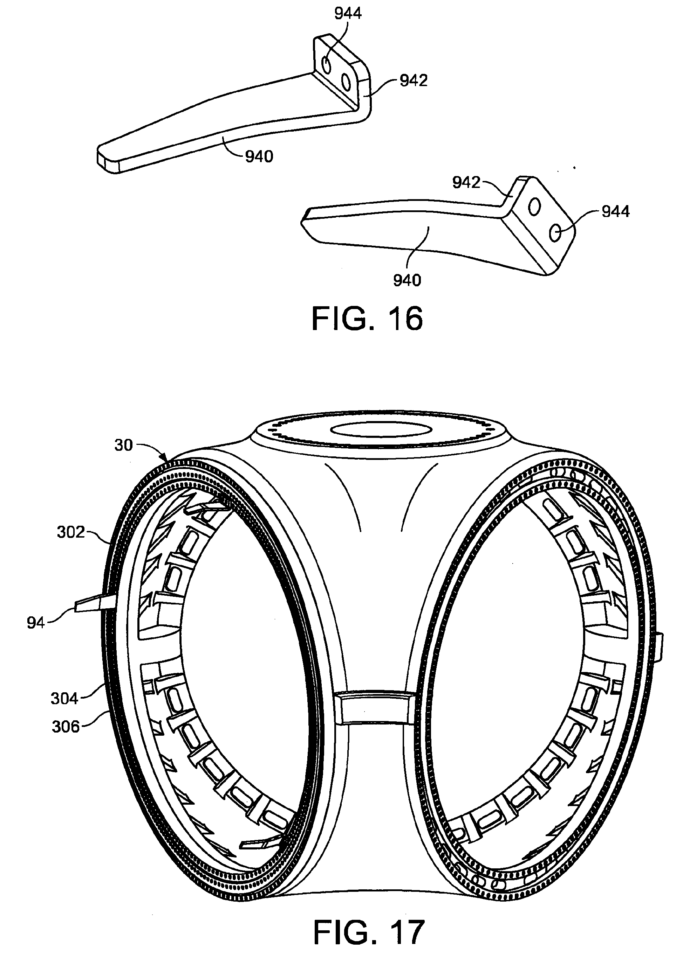

The guide rods 94 are illustrated in more detail in Figures 16 and 17. Figure 16 shows two views of the shape of the guide rods 94 in isolation. As can be seen in the diagram, the guide rods are essentially L-shaped having a connector portion 940, for engaging with the socket-like section 96, and a shorter flange section 942 for engaging with the blade root bearing assembly 30. The connector portion 940 is tapered but also has a slight bend intermediate its length (this can be seen more easily in a Figure 14) which facilitates its connection with the socket-like section 96.

The connection of the guide rod 94 to the bearing assembly 30 is made using bolts or screws passing through holes 944 in flange section 942. Figure 17 illustrates the blade root bearing assembly 30 and shows the attachment position for the guide rods 94. In this example, the blade root bearing assembly 30 comprises three separate bearing rings, an outer ring 302, an intermediate ring 304, and an inner ring 306. The bolts 100 of the blade root flange 98 are received in the holes of the intermediate ring 304. The guide rods 94 are therefore attached to the inner bearing ring 306 so that in use they sit inside and extend into the interior of the blade root flange 98.

In Figure 17, although only three guide rods 94 are shown, in equal angular relationship to one another, it will be appreciated that a greater number of guide rods 94 could be used if desired, at equal spacing or otherwise.

In Figure 15, the socket-like section 96 is shown as an additional piece for attachment to the interior of the blade root. The socket-like section can then be manufactured from a suitable material, like metal, or hardened plastic, and secured in place with bolts or adhesive. This arrangement is advantageous as it becomes relatively straightforward to attach the socket in position. In alternative embodiments, however, the socket-like section 96 could be integral to the blade root, as if the groove 960 were to be engineered into the blade root itself. Further, while the tapered groove is preferred for ease of use, other shapes for the socket could be used, such as a simple hole, wall or peg arrangement to cooperate with the guide rod 94.

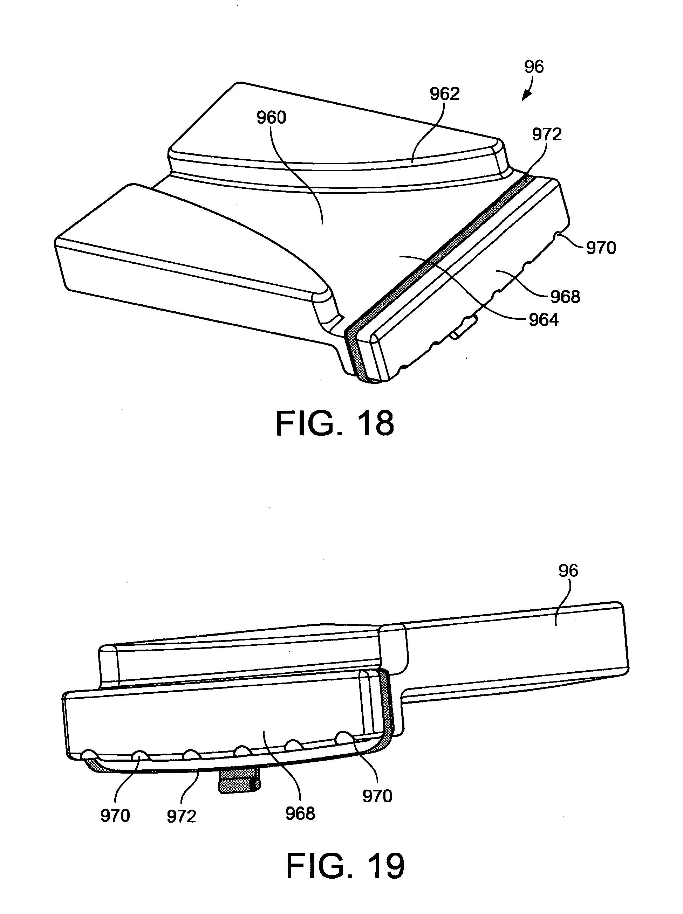

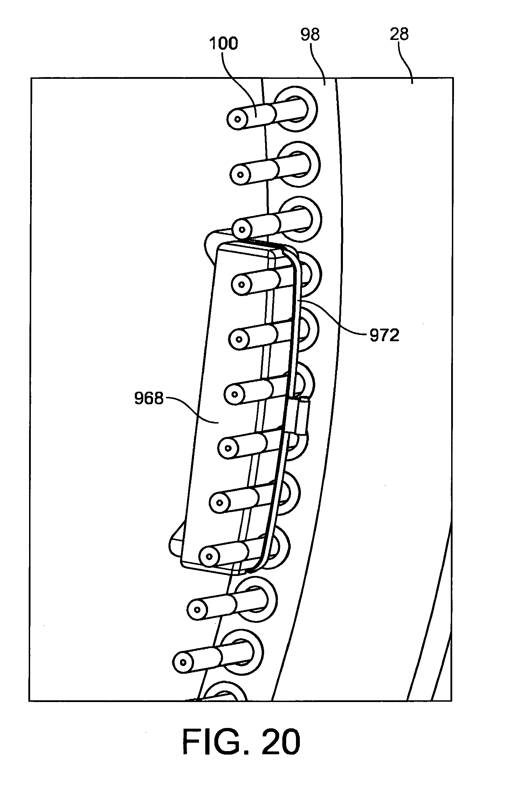

An alternative example of the socket-like section 96 will now be described with reference to Figures 18 to 20. As shown in Figure 18, the socket-like section 96 is provided with the tapered groove 960, shoulder 962 and opening 964 of Figure 15. However, at the opening 964, the socket-like section is provided with a lip 968 that extends outwards from the opening. The width of the lip 968 is greater than the width of the rest of the socket-like section 96, and on the edge of the lip opposite the opening 964, a number of recesses 970 are provided. A tie or cable 972 is secured in place around the lip 968. These can be viewed more easily in Figure 19.

In use, the socket 96 is held in place on the inside of the blade root by attaching the cable 972 around a number of the bolts 100 on the flange 98. In this arrangement, the lip 968 extends slightly outwards from the flange 98, while the greater width of the lip 968 means that the bolts 100 are received in the recesses 970. The tension of the cable 972 keeps the section 96 in place without the need for adhesive. In this way, when the bolts 100 are threaded into the holes in the blade root bearing assembly 30 and the blade flange 98 and the blade root bearing assembly 30 are brought together, the lip 968 will sit between the flange 98 and the bearing assembly 30. The cable 972 can then be cut and the socket 96 detached into the inside of the blade root flange 98. A service engineer working in the hub 26 can then retrieve the socket 96 for later use.

In alternative examples, it is possible that the guide rods are located on the blade root flange 98, and the socket like section 96 is located on the blade root bearing assembly 30.

As noted above, the arrangement of blades against the tower as shown in Figure 4 can be advantageously used during transport of the tower 22 to the offshore installation location. In particular, the ability to store blades against the tower or transport greatly simplifies installation. The tower can be assembled on land, at a site such as a dry dock for example, and the three wind turbine blades 28 attached to the tower by means of the respective support arms 52 and 54. This greatly reduces the need for large crane operations, as the tower and blades can be assembled horizontally and the combined unit of the tower and blades subsequently lifted into a vertical position using an onshore crane. Ordinarily, four separate lifting operations would be required for this operation, one for the tower and subsequent lifting operation for each blade. The nacelle can finally be attached to the tower using a subsequent lifting operation, and the semi-assembled tower then transported by a ship or barge to an installation. During installation, the wind turbine blades can be lifted into place using the winch 82 or on-tower crane of the wind turbine, or using an on-ship crane.

The support arms can be retained on the tower exterior for use in any later servicing or maintenance operations, to usefully secure the wind turbine blades against the tower 22, when the wind turbine blades are required to be detached from the rotor hub. Strictly, only one set of support arms for supporting one wind turbine blade during maintenance needs to be retained on the tower, allowing the other two sets of support arms to be removed if desired.

Although examples of the invention have been described involving offshore horizontal axis wind turbines, it will be appreciated that the invention could be used with land-based wind turbines, or with vertical axis wind turbines where appropriate.

Further, although the invention has been illustrated by a number of separate examples, it will be appreciated that features of the separate examples could be used in combination.

## Claims

1. Wind turbine apparatus for releasably attaching one or more wind turbine blades (28) to a wind turbine rotor hub (26), comprising:
a first (52) and a second (54) support arm mounted on the wind turbine tower, and having connectors (526,552) for making a secure releasable connection with an individual wind turbine blade (28) at one or more respective connection points;
**characterised in that**:
the first and second support arms (52,54) have an extended position and a stowed position, wherein in the extended position the first and a second arms extend from the tower (22) and support the wind turbine blade in a position for connection to the wind turbine rotor hub (26), and wherein in the stowed position the first and a second arms lie close to the tower and support the blade in a stowed position against the tower;
a winch or pulley (82) is provided having a cable (80) for attachment to the blade root, such that when the wind turbine blade is detached from the wind turbine rotor hub, at least part of the weight of the wind turbine blade is supported on the cable (80),
and **in that** the first and second support arms (52,54) are both located towards an upper region of the wind turbine tower (22) and arranged to support the wind turbine blade at one or more respective connection points closer to a blade root portion of the blade than to a blade tip portion.

2. The apparatus of claim 1, wherein the one or more respective connection points are located in the vicinity of the centre of gravity (70) of the wind turbine blade.

3. The apparatus of claim 1 or 2, wherein when the first and second arms are in their extended positions, the wind turbine blade is orientated so that an engagement surface at the blade root (98) is aligned with an engagement surface of the blade root bearing (30) on the blade rotor hub.

4. The apparatus of any preceding claim, wherein the second arm (54) is mounted lower than the first (52) on the wind turbine tower, and wherein when in their extended positions, the second arm (54) is operable to extend further from the wind turbine tower than the first arm (52).

5. The apparatus of any preceding claim, wherein the connectors (526,552) are mounted on a moveable bearing that can be controlled remotely for adjusting the orientation of the connectors (526,552) with respect to the arms.

6. The apparatus of any preceding claim, wherein the second arm (54) is articulated, and has first (542) and second (544) sections, and wherein in the stowed position, the second arm is at least partly folded.

7. The apparatus of claim 6, comprising:
a first bushing section (548) attached to the tower at which the second arm is pivotally connected via the first section (542) ;
a second bushing section (550) attached to the tower below the first, such that in the stowed position the second arm is arranged to hang downwards with the first section (542) supported by the first and second bushing.

8. The apparatus of claim 7, wherein the second section (544) is hinged on the first section (542), and the connector (552) for connecting to the wind turbine blade is located at the end of the second section (544), such that in the stowed position the second section (544) extends from the tower to support the wind turbine blade.

9. The apparatus of claim 6, comprising:
a bushing (548) attached to the tower at which the second arm is pivotally connected via the second arm first section(542) ;
wherein the second arm second section (544) is hinged on the second arm first section, and wherein the connector is located at the hinge between the first and the second sections (542,544), such that in the extended position the second section (544) lies substantially along the longitudinal axis of the blade, and the first section (542) of the second arm supports the wind turbine blade away from the tower;
the second section (544) comprising a connection portion for attaching to the blade near the connection point for the first arm (52).

10. The apparatus of claim 9, wherein the end of the second section of the second arm is attached by a hinge (540) to the first arm.

11. The apparatus of any of any preceding claim, comprising:
first (528) and second (530) pivot mountings for the first arm (52), attached to the wind turbine tower and angularly displaced around the circumference of the tower from one another; wherein the first arm is tapered and comprises:
first and second angled side sections (522), pivoted on the tower at the respective first and second pivot mountings (528,530);
an apex section joining the angled side sections to form an apex (524);
and wherein the connector (526) is mounted on the apex portion.

12. The apparatus of any preceding claim, wherein the connectors (526,552) of each of the one or more support arms cooperate with complementary connectors on the wind turbine blade to keep the arms at a fixed orientation to the longitudinal axis of the wind turbine blade.

13. The apparatus of claim 12, wherein the complementary connectors on the wind turbine blade comprise a tapered compartment for guiding the connectors of the arms (526,552) into an engagement position for connection.

14. The apparatus of claim 13, wherein the connectors of the one or more arms are received by complementary connectors attached to the spar of the wind turbine blade.

15. The apparatus of claim 13 or 14, wherein the blade comprises a releasable blade surface portion for accommodating the one or more arm connectors (526,552) when they are received by the complementary connector in the blade.

16. The apparatus of any preceding claim, wherein the connection points of the first and second arms (52,54) are disposed on opposite sides of the centre of gravity (70) of the blade along a substantially longitudinal blade axis.

17. The apparatus of claim 16, where the connection points of the first and second arms are located equidistant from the centre of gravity (70).

18. The apparatus of claim 16, where the first and second connection points are located at different distances from the centre of gravity (70).

19. The apparatus of any preceding claim comprising a blade tip support section (56) located on the tower below the first and second arms to receive the blade tip when the wind turbine blade is in the stowed position.

20. The apparatus of claim 19, wherein the blade tip support section (56) comprises a a connector for making a secure releasable connection with a wind turbine blade tip (32) at one or more respective connection points.

21. The apparatus of claim 19, wherein the blade tip support section comprises an inflatable member.

22. The apparatus of any preceding claim, wherein the winch or pulley (82) is located in the rotor hub.

23. The apparatus of any preceding claim, wherein the winch or pulley (82) is located outside of the rotor hub.

24. The apparatus of any preceding claim, comprising a motor for providing a pulling force to the cable (80).

25. The apparatus of any preceding claim comprising a drive system for driving the one or more arms (52,54) between the stowed and extended positions.

26. A method of releasably detaching one or more wind turbine blades (28) from a wind turbine rotor hub (26) for maintenance, comprising:
connecting one end of a cable (80) to the blade root section of the wind turbine blade, while it is secured to the wind turbine rotor hub, the other end of the cable connecting to or over a winch or pulley (82);
connecting to the wind turbine blade first (52) and second (54) support arms, mounted on the wind turbine tower (22) for movement between an extended position in which the first and second support arms extend from the tower and support the wind turbine blade (28) in a position for connection to the wind turbine rotor hub and a stowed position in which first and second support arms lie close to the tower and support the blade in a stowed position against the tower;
detaching the wind turbine blade (28) from the wind turbine rotor hub (26), such that it is supported by the cable (80) and/or the first and second support arms (52,54);
wherein the first and second support arms are both located towards an upper region of the wind turbine tower (22) and arranged to support the wind turbine blade at one or more respective connection points closer to a blade root portion of the blade than to a blade tip portion.

27. The method of claim 26, comprising lowering the wind turbine blade using the cable (80) until the one or more arms adopt their stowed position against the tower.

28. The method of claim 26 or 27 comprising holding the blade in position by means of the cable (80) or the arms (52,54) while carrying out a repair operation on the blade, blade root, blade root bearing, or blade-hub connection ring.

29. A method of releasably attaching one or more wind turbine blades (28) from a wind turbine rotor hub for maintenance, comprising:
connecting one end of a cable (80) to the blade root section of the wind turbine blade, while it is in a stowed position and supported on first (52) and second (54) support arms, mounted on the wind turbine tower (22) for movement between an extended position in which the first and second support arms extend from the tower and support the wind turbine blade in a position for connection to the wind turbine rotor hub (26) and a stowed position in which the first and second support arms lie close to the tower and support the blade in a stowed position against the tower, wherein the other end of the cable (80) is connected to a winch (82);
raising the wind turbine blade towards the rotor hub, by means of the cable (80) and/or the first and second support arms (52,54) until the first and second support arms adopt their extended position;
securing the wind turbine blade to the wind turbine rotor hub (26);
releasing the cable (80) and the support arms (52,54) from the wind turbine blade;
restoring the support arms to their stowed position;
wherein the first and second support arms are both located towards an upper region of the wind turbine tower and arranged to support the wind turbine blade at one or more respective connection points closer to a blade root portion of the blade than to a blade tip portion.

## Patentansprüche

1. Windenergieanlage zum lösbaren Befestigen eines oder mehrerer Windturbinenblätter (28) an einer Windturbinen-Rotornabe (26), umfassend:
einen ersten (52) und einen zweiten (54) Tragarm, die an dem Windenergieanlagenturm befestigt sind und Verbindungselemente (526, 552) zum Herstellen einer sicheren lösbaren Verbindung mit einem einzelnen Windturbinenblatt (28) an einem oder mehreren entsprechenden Verbindungspunkten aufweisen;
**dadurch gekennzeichnet, dass**:
der erste und zweite Tragarm (52, 54) eine ausgefahrene Stellung und eine eingefahrene Stellung aufweisen, wobei sich der erste und ein zweiter Arm in der ausgefahrenen Stellung von dem Turm (22) erstrecken und das Windturbinenblatt in einer Stellung zur Verbindung mit der Windturbinen-Rotornabe (26) tragen, und wobei der erste und ein zweiter Arm in der eingefahrenen Stellung eng an dem Turm anliegen und das Blatt in einer eingefahrenen Stellung gegen den Turm stützen;
eine Winde oder ein Flaschenzug (82) bereitgestellt ist, der ein Seil (80) zur Befestigung an der Blattwurzel aufweist, sodass, wenn das Windturbinenblatt von der Windturbinen-Rotornabe abgenommen ist, mindestens ein Teil des Gewichts des Windturbinenblatts durch das Seil (80) getragen wird,
und dadurch, dass der erste und zweite Tragarm (52, 54) beide in Richtung eines oberen Bereichs des Windenergieanlagenturms (22) gelegen sind und angeordnet sind, um das Windturbinenblatt an einem oder mehreren entsprechenden Verbindungspunkten, die näher an einem Blattwurzelabschnitt des Blatts als an einem Blattspitzenabschnitt sind, zu tragen.

2. Vorrichtung nach Anspruch 1, wobei einer oder mehrere entsprechende Verbindungspunkte in der Nähe des Schwerpunkts (70) des Windturbinenblatts angeordnet sind.

3. Vorrichtung nach Anspruch 1 oder 2, wobei, wenn der erste und zweite Arm in ihrer ausgefahrenen Stellung sind, das Windturbinenblatt derart ausgerichtet ist, dass eine Eingriffsfläche an der Blattwurzel (98) zu einer Eingriffsfläche des Blattwurzellagers (30) auf der Blatt-Rotornabe ausgerichtet ist.

4. Vorrichtung nach einem der vorhergehenden Ansprüche, wobei der zweite Arm (54) tiefer als der erste (52) an dem Windenergieanlagenturm befestigt ist und wobei, wenn sie in ihrer ausgefahrenen Stellung sind, der zweite Arm (54) betriebsbereit ist, sich weiter von dem Windenergieanlagenturm weg zu erstrecken als der erste Arm (52).

5. Vorrichtung nach einem der vorhergehenden Ansprüche, wobei die Verbindungselemente (526, 552) an einem beweglichen Lager befestigt sind, das zum Anpassen der Ausrichtung der Verbindungselemente (526, 552) bezüglich der Arme ferngesteuert werden kann.

6. Vorrichtung nach einem der vorhergehenden Ansprüche, wobei der zweite Arm (54) gelenkig ist und erste (542) und zweite (544) Abschnitte aufweist und wobei der zweite Arm in der eingefahrenen Stellung mindestens teilweise zusammengeklappt ist.

7. Vorrichtung nach Anspruch 6, umfassend:
einen ersten Buchsenabschnitt (548), der an dem Turm befestigt ist, an dem der zweite Arm über den ersten Abschnitt (542) drehbar verbunden ist;
einen zweiten Buchsenabschnitt (550), der an dem Turm unter dem ersten derart befestigt ist, dass der zweite Arm in der eingefahrenen Stellung zum Herunterhängen ausgelegt ist, wobei der erste Abschnitt (542) durch die erste und zweite Buchse getragen wird.

8. Vorrichtung nach Anspruch 7, wobei der zweite Abschnitt (544) an dem ersten Abschnitt (542) angelenkt ist und das Verbindungselement (552) zum Verbinden mit dem Windturbinenblatt an dem Ende des zweiten Abschnitts (544) angeordnet ist, sodass sich der zweite Abschnitt (544) in der eingefahrenen Stellung von dem Turm erstreckt, um das Windturbinenblatt zu tragen.

9. Vorrichtung nach Anspruch 6, umfassend:
eine Buchse (548), die an dem Turm befestigt ist, an der der zweite Arm über den ersten Abschnitt (542) des zweiten Arms drehbar angeschlossen ist;
wobei der zweite Abschnitt (544) des zweiten Arms an dem ersten Abschnitt des zweiten Arms angelenkt ist und wobei das Verbindungselement an dem Scharnier zwischen dem ersten und dem zweiten Abschnitt (542, 544) angeordnet ist, sodass der zweite Abschnitt (544) in der ausgefahrenen Stellung im Wesentlichen entlang der Längsachse des Blatts liegt und der erste Abschnitt (542) des zweiten Arms das Windturbinenblatt von dem Turm weg trägt;
der zweite Abschnitt (544) einen Verbindungsbereich zum Befestigen an einem Blatt in der Nähe des Verbindungspunkts für den ersten Arm (52) umfasst.

10. Vorrichtung nach Anspruch 9, wobei das Ende des zweiten Abschnitts des zweiten Arms über ein Scharnier (540) an dem ersten Arm befestigt ist.

11. Vorrichtung nach einem der vorhergehenden Ansprüche, umfassend:
erste (528) und zweite (530) Drehgelenkbefestigungen für den ersten Arm (52), die an dem Windenergieanlagenturm befestigt sind und um den Umfang des Turms herum schräg zueinander versetzt sind; wobei der erste Arm konisch ist und Folgendes umfasst:
erste und zweite angewinkelte Seitenabschnitte (522), die an dem Turm an den entsprechenden ersten und zweiten Drehgelenkbefestigungen (528, 530) drehgelenkig angeordnet sind;
einen Spitzenabschnitt, der die angewinkelten Seitenabschnitte zusammenführt, um eine Spitze (524) zu bilden;
und wobei das Verbindungselement (526) an dem Spitzenabschnitt befestigt ist.

12. Vorrichtung nach einem der vorhergehenden Ansprüche, wobei die Verbindungselemente (526, 552) von jedem des einen oder der mehreren Tragarme mit ergänzenden Verbindungselementen an dem Windturbinenblatt zusammenwirken, um die Arme in einer festen Ausrichtung zu der Längsachse des Windturbinenblatts zu tragen.

13. Vorrichtung nach Anspruch 12, wobei die ergänzenden Verbindungselemente des Windturbinenblatts einen verjüngten Abschnitt zum Führen der Verbindungselemente der Arme (526, 552) in eine Einraststellung umfassen.

14. Vorrichtung nach Anspruch 13, wobei die Verbindungselemente des einen oder der mehreren Arme von ergänzenden Verbindungselementen, die an dem Holm des Windturbinenblatts befestigt sind, aufgenommen werden.

15. Vorrichtung nach Anspruch 13 oder 14, wobei das Blatt einen lösbaren Blattflächenbereich zum Unterbringen des einen oder der mehreren Arm-Verbindungselemente (526, 552), wenn diese von dem ergänzenden Verbindungselement im Blatt aufgenommen werden, umfasst.

16. Vorrichtung nach einem der vorhergehenden Ansprüche, wobei die Verbindungspunkte des ersten und zweiten Arms (52, 54) auf gegenüberliegenden Seiten des Schwerpunkts (70) des Blatts entlang einer im Wesentlichen länglichen Blattachse angeordnet sind.

17. Vorrichtung nach Anspruch 16, wobei die Verbindungspunkte des ersten und zweiten Arms abstandsgleich zu dem Schwerpunkt (70) angeordnet sind.

18. Vorrichtung nach Anspruch 16, wobei die ersten und zweiten Verbindungspunkte in unterschiedlichen Abständen zum Schwerpunkt (70) angeordnet sind.

19. Vorrichtung nach einem der vorhergehenden Ansprüche, die einen Blattspitzen-Trageabschnitt (56) umfasst, der auf dem Turm unter dem ersten und zweiten Arm angeordnet ist, um die Blattspitze aufzunehmen, wenn das Windturbinenblatt in der eingefahrenen Stellung ist.

20. Vorrichtung nach Anspruch 19, wobei der Blattspitzen-Trageabschnitt (56) ein Verbindungselement zum Herstellen einer sicheren lösbaren Verbindung mit einer Windturbinen-Blattspitze (32) an einem oder mehreren entsprechenden Verbindungspunkten umfasst.

21. Vorrichtung nach Anspruch 19, wobei der Blattspitzen-Trageabschnitt ein aufblasbares Element umfasst.

22. Vorrichtung nach einem der vorhergehenden Ansprüche, wobei die Winde oder der Flaschenzug (82) in der Rotornabe angeordnet ist.

23. Vorrichtung nach einem der vorhergehenden Ansprüche, wobei die Winde oder der Flaschenzug (82) außerhalb der Rotornabe angeordnet ist.

24. Vorrichtung nach einem der vorhergehenden Ansprüche, die einen Motor zum Bereitstellen einer Zugkraft auf das Seil (80) umfasst.

25. Vorrichtung nach einem der vorhergehenden Ansprüche, die ein Antriebssystem zum Antreiben des einen oder der mehreren Arme (52, 54) zwischen einer eingefahrenen und einer ausgefahrenen Stellung umfasst.

26. Verfahren zum lösbaren Abnehmen eines oder mehrerer Windturbinenblätter (28) von einer Windturbinen-Rotornabe (26) zur Wartung, umfassend:
Verbinden von einem Ende eines Seils (80) mit dem Blattwurzelabschnitt des Windturbinenblatts, während dieses an der Windturbinen-Rotornabe gesichert ist, wobei das andere Ende des Seils mit oder über eine Winde oder einen Flaschenzug (82) verbunden ist;
Verbinden mit dem Windturbinenblatt von ersten (52) und zweiten (54) Tragarmen, die auf dem Windenergieanlagenturm (22) zur Bewegung zwischen einer ausgefahrenen Stellung, in der sich die ersten und zweiten Tragarme von dem Turm erstrecken und das Windturbinenblatt (28) in einer Stellung zur Verbindung mit der Windturbinen-Rotornabe tragen, und einer eingefahrenen Stellung, in der erste und zweite Tragarme nah an dem Turm liegen und das Blatt in einer eingefahrenen Stellung gegen den Turm stützen;
Abnehmen des Windturbinenblatts (28) von der Windturbinen-Rotornabe (26), sodass es durch ein Seil (80) und/oder die ersten und zweiten Tragarme (52, 54) getragen wird;
wobei die ersten und zweiten Tragarme beide in Richtung eines oberen Bereichs des Windenergieanlagenturms (22) gelegen sind und angeordnet sind, um das Windturbinenblatt an einem oder mehreren entsprechenden Verbindungspunkten, die näher an einem Blattwurzelabschnitt des Blatts als an einem Blattspitzenabschnitt sind, zu tragen.

27. Verfahren nach Anspruch 26, das ein Absenken des Windturbinenblatts mithilfe des Seils (80) umfasst, bis der eine oder die mehreren Arme ihre eingefahrene Stellung gegen den Turm einnehmen.

28. Verfahren nach Anspruch 26 oder 27, das das Halten des Blatts in Stellung mithilfe des Seils (80) oder der Arme (52, 54) umfasst, während ein Reparaturvorgang an dem Blatt, der Blattwurzel, dem Blattwurzellager oder dem Blattnaben-Verbindungsring durchgeführt wird.

29. Verfahren zum lösbaren Befestigen eines oder mehrerer Windturbinenblätter (28) von einer Windturbinen-Rotornabe zur Wartung, umfassend:
Verbinden von einem Ende eines Seils (80) mit dem Blattwurzelabschnitt des Windturbinenblatts, während es in einer eingefahrenen Stellung ist und auf den ersten (52) und zweiten (54) Tragarmen, die auf dem Windenergieanlagenturm (22)zur Bewegung zwischen einer ausgefahrenen Stellung, in der sich die ersten und zweiten Tragarme von dem Turm erstrecken und das Windturbinenblatt in einer Stellung zur Verbindung mit der Windturbinen-Rotornabe (26) tragen, und einer eingefahrenen Stellung, in der die ersten und zweiten Tragarme nah an dem Turm liegen und das Blatt in einer eingefahrenen Stellung gegen den Turm stützen, getragen wird, wobei das andere Ende des Seils (80) mit einer Winde (82) verbunden ist;
Anheben des Windturbinenblatts in Richtung der Rotornabe mittels eines Seils (80) und/oder den ersten und zweiten Tragarmen (52, 54), bis die ersten und zweiten Tragarme ihre ausgefahrene Stellung einnehmen;
Sichern des Windturbinenblatts an der Windturbinen-Rotornabe (26);
Freigeben des Seils (80) und der Tragarme (52, 54) von dem Windturbinenblatt;
Zurückbringen der Tragarme in ihre eingefahrene Stellung;
wobei die ersten und zweiten Tragarme beide in Richtung eines oberen Bereichs des Windenergieanlagenturms gelegen sind und angeordnet sind, um das Windturbinenblatt an einem oder mehreren entsprechenden Verbindungspunkten, die näher an einem Blattwurzelabschnitt des Blatts als an einem Blattspitzenabschnitt sind, zu tragen.

## Revendications

1. Appareil de turbine éolienne pour fixer de manière amovible une ou plusieurs pales de turbine éolienne (28) sur un moyeu de rotor de turbine éolienne (26), comprenant :
un premier (52) et un second (54) bras de support montés sur la tour de turbine éolienne, et comprenant des raccords (526, 552) pour réaliser un raccordement amovible sûr avec une pale de turbine éolienne individuelle (28) au niveau d'un ou plusieurs points de raccordement respectifs ;
**caractérisé en ce que** :
les premier et second bras de support (52, 54) présentent une position étendue et une position repliée, dans lequel, dans la position étendue, les premier et second bras s'étendent depuis la tour (22) et supportent la pale de turbine éolienne dans une position pour le raccordement au moyeu de rotor de turbine éolienne (26), et dans lequel, dans la position repliée, les premier et second bras reposent près de la tour et supportent la pale dans une position repliée contre la tour ;
un treuil ou une poulie (82) est fourni(e), comprenant un câble (80) pour la fixation sur le pied de pale, de sorte que lorsque la pale de turbine éolienne est détachée du moyeu de rotor de turbine éolienne, au moins une partie du poids de la pale de turbine éolienne est supportée sur le câble (80),
et **en ce que** les premier et second bras de support (52, 54) sont tous deux situés en direction d'une région supérieure de la tour de turbine éolienne (22) et agencés pour supporter la pale de turbine éolienne au niveau d'un ou plusieurs points de raccordement respectifs plus proches d'une partie de pied de pale de la pale que d'une partie de bout de pale.

2. Appareil selon la revendication 1, dans lequel le ou les points de raccordement respectifs sont situés à proximité du centre de gravité (70) de la pale de turbine éolienne.

3. Appareil selon la revendication 1 ou 2, dans lequel les premier et second bras sont dans leurs positions étendues, la pale de turbine éolienne est orientée de sorte qu'une surface d'entrée en prise au niveau du pied de pale (98) soit alignée avec une surface d'entrée en prise du roulement de pied de pale (30) sur le moyeu de rotor de pale.

4. Appareil selon l'une quelconque des revendications précédentes, dans lequel le second bras (54) est monté plus bas que le premier (52) sur la tour de turbine éolienne, et dans lequel, lorsqu'ils sont dans leur position étendue, le second bras (54) est apte à s'étendre davantage depuis la tour de turbine éolienne que le premier bras (52).

5. Appareil selon l'une quelconque des revendications précédentes, dans lequel les raccords (526, 552) sont montés sur un roulement mobile de manière à pouvoir être commandés à distance pour régler l'orientation des raccords (526, 552) par rapport aux bras.

6. Appareil selon l'une quelconque des revendications précédentes, dans lequel le second bras (54) est articulé, et comprend des première (542) et seconde (544) sections, et dans lequel, dans la position repliée, le second bras est au moins partiellement plié.

7. Appareil selon la revendication 6, comprenant :
une première section de bague (548) fixée sur la tour au niveau de laquelle le second bras est raccordé de façon pivotante via la première section (542) ;
une seconde section de bague (550) fixée sur la tour sous la première, de sorte que, dans la position repliée, le second bras soit agencé pour être suspendu vers le bas avec la première section (542) supportée par les première et seconde bagues.

8. Appareil selon la revendication 7, dans lequel la seconde section (544) est articulée sur la première section (542), et le raccord (552) pour le raccordement à la pale de turbine éolienne est situé au niveau de l'extrémité de la seconde section (544), de sorte que, dans la position repliée, la seconde section (544) s'étende depuis la tour pour supporter la pale de turbine éolienne.

9. Appareil selon la revendication 6, comprenant :
une bague (548) fixée sur la tour au niveau de laquelle le second bras est raccordé de façon pivotante via la première section de second bras (542) ;
dans lequel la seconde section de second bras (544) est articulée sur la première section de second bras, et
dans lequel le raccord est situé au niveau de l'articulation entre les première et seconde sections (542, 544), de sorte que dans la position étendue la seconde section (544) repose sensiblement le long de l'axe longitudinal de la pale, et la première section (542) du second bras supporte la pale de turbine éolenne à distance de la tour ;
la seconde section (544) comprenant une partie de raccordement pour la fixation sur la pale près du point de raccordement pour le premier bras (52).

10. Appareil selon la revendication 9, dans lequel l'extrémité de la seconde section du second bras est fixée par une articulation (540) sur le premier bras.

11. Appareil selon l'une quelconque des revendications précédentes, comprenant :
des premier (528) et second (530) montages pivotants pour le premier bras (52), fixés sur la tour de turbine éolienne et déplacés angulairement autour de la circonférence de la tour l'un depuis l'autre, dans lequel le premier bras est conique et comprend :
des première et seconde sections latérales inclinées (522), pivotées sur la tour au niveau des premier et second montages pivotants respectifs (528, 530) ;
une section de sommet raccordant les sections latérales inclinées pour former un sommet (524) ;
et dans lequel le raccord (526) est monté sur la partie de sommet.

12. Appareil selon l'une quelconque des revendications précédentes, dans lequel les raccords (526, 552) de chacun du ou des bras de support coopèrent avec des raccords complémentaires sur la pale de turbine éolienne pour maintenir les bras selon une orientation fixe par rapport à l'axe longitudinal de la pale de turbine éolienne.

13. Appareil selon la revendication 12, dans lequel les raccords complémentaires sur la pale de turbine éolienne comprennent un compartiment conique pour guider les raccords des bras (526, 552) dans une position d'entrée en prise pour le raccordement.

14. Appareil selon la revendication 13, dans lequel les raccords du ou des bras sont reçus par des raccords complémentaires fixés sur le longeron de la pale de turbine éolienne.

15. Appareil selon la revendication 13 ou 14, dans lequel la pale comprend une partie de surface de pale amovible pour loger le ou les raccords de bras (526, 552) lorsqu'ils sont reçus par le raccord complémentaire dans la pale.

16. Appareil selon l'une quelconque des revendications précédentes, dans lequel les points de raccordement des premier et second bras (52, 54) sont disposés sur des côtés opposés du centre de gravité (70) de la pale le long d'un axe de pale sensiblement longitudinal.

17. Appareil selon la revendication 16, dans lequel les points de raccordement des premier et second bras sont situés à équidistance du centre de gravité (70).

18. Appareil selon la revendication 16, dans lequel les premier et second points de raccordement sont situés à des distances différentes du centre de gravité (70).

19. Appareil selon l'une quelconque des revendications précédentes comprenant une section de support de bout de pale (56) située sur la tour sous les premier et second bras pour recevoir le bout de pale lorsque la pale de turbine éolienne est dans la position repliée.

20. Appareil selon la revendication 19, dans lequel la section de support de bout de pale (56) comprend un raccord permettant de réaliser un raccordement amovible sûr avec un bout de pale de turbine éolienne (32) au niveau d'un ou plusieurs points de raccordement respectifs.

21. Appareil selon la revendication 19, dans lequel la section de support de bout de pale comprend un élément gonflable.

22. Appareil selon l'une quelconque des revendications précédentes, dans lequel le treuil ou la poulie (82) est situé(e) dans le moyeu de rotor.

23. Appareil selon l'une quelconque des revendications précédentes, dans lequel le treuil ou la poulie (82) est situé(e) à l'extérieur du moyeu de rotor.

24. Appareil selon l'une quelconque des revendications précédentes, comprenant un moteur pour fournir une force de traction au câble (80).

25. Appareil selon l'une quelconque des revendications précédentes comprenant un système d'entraînement pour entraîner le(s) bras (52, 54) entre les positions repliée et étendue.

26. Procédé de détachement amovible d'une ou plusieurs pales de turbine éolienne (28) depuis un moyeu de rotor de turbine éolienne (26) pour la maintenance, comprenant :
le raccordement d'une extrémité d'un câble (80) à la section de pied de pale de la pale de turbine éolienne, alors qu'elle est fixée sur le moyeu de rotor de turbine éolienne, l'autre extrémité du câble étant raccordée à ou sur un treuil ou une poulie (82) ;
le raccordement aux premier (52) et second (54) bras de support de pale de turbine éolienne, montés sur la tour de turbine éolienne (22) pour un mouvement entre une position étendue dans laquelle les premier et second bras de support s'étendent depuis la tour et supportent la pale de turbine éolienne (28) dans une position pour le raccordement au moyeu de rotor de turbine éolienne et une position repliée dans laquelle les premier et second bras de support reposent près de la tour et supportent la pale dans une position repliée contre la tour ;
le détachement de la pale de turbine éolienne (28) du moyeu de rotor de turbine éolienne (26), de sorte qu'elle soit supportée par le câble (80) et/ou les premier et second bras de support (52, 54) ;
dans lequel les premier et second bras de support sont tous deux situés en direction d'une région supérieure de la tour de turbine éolienne (22) et agencés pour supporter la pale de turbine éolienne au niveau d'un ou plusieurs points de raccordement respectifs plus proches d'une partie de pied de pale de la pale que d'une partie de bout de pale.

27. Procédé selon la revendication 26, comprenant l'abaissement de la pale de turbine éolienne au moyen du câble (80) jusqu'à ce qu'un ou plusieurs bras adoptent leur position repliée contre la tour.

28. Procédé selon la revendication 26 ou 27 comprenant le maintien de la pale en position au moyen du câble (80) ou des bras (52, 54) tout en réalisant une opération de réparation sur la pale, le pied de pale, le roulement de pied de pale, ou l'anneau de raccordement de moyeu de pale.

29. Procédé de fixation amovible d'une ou plusieurs pales de turbine éolienne (28) depuis un moyeu de rotor de turbine éolienne pour la maintenance, comprenant :
le raccordement d'une extrémité d'un câble (80) à la section de pied de pale de la pale de turbine éolienne, alors qu'elle est dans une position repliée et supportée sur des premier (52) et second (54) bras de support, montés sur la tour de turbine éolienne (22) pour un mouvement entre une position étendue dans laquelle les premier et second bras de support s'étendent depuis la tour et supportent la pale de turbine éolienne dans une position pour le raccordement au moyen de rotor de turbine éolienne (26) et une position repliée dans laquelle les premier et second bras de support reposent près de la tour et supportent la pale dans une position repliée contre la tour, dans lequel l'autre extrémité du câble (80) est raccordée à un treuil (82) ;
l'élévation de la pale de turbine éolienne en direction du moyeu de rotor, au moyen du câble (80) et/ou des premier et second bras de support (52, 54) jusqu'à ce que les premier et second bras de support adoptent leur position étendue ;
la fixation de la pale de turbine éolienne sur le moyeu de rotor de turbine éolienne (26) ;
la libération du câble (80) et des bras de support (52, 54) depuis la pale de turbine éolienne ;
le rétablissement des bras de support dans leur position repliée ;
dans lequel les premier et second bras de support sont tous deux situés en direction d'une région supérieure de la tour de turbine éolienne et agencés pour supporter la pale de turbine éolienne au niveau d'un ou
plusieurs points de raccordement respectifs plus proches d'une partie de pied de pale de la pale que d'une partie de bout de pale.
